# DEMANDE DE BREVET EUROPEEN

(11) **EP 3 854 861 A1**
(43) Date de publication de la demande: **28.07.2021**
(21) Numéro de dépôt: 20305048.9
(22) Date de dépôt: 22.01.2020
(51) Int. Cl.: C10B 47/44, C10B 53/02, C10B 57/10, C10L 5/36, C10L 5/44

(54) **PROCÉDÉ ET INSTALLATION DE PRODUCTION DE BIOCHAR ET ASSIMILÉS**

(71) Demandeur: SLB SARL, 50160 Torigny-les-Villes (FR)
(72) Inventeur: LEDENTU, Stéphane, 75007 Paris (FR); GAUDIER, Freddy, 37100 Tours (FR)
(74) Mandataire: Gauchet, Fabien Roland

(57) **Abrégé**

L'installation de production de biochar (1) ou assimilés à partir d'une biomasse (10), l'installation comportant une station de transformation (100) de la biomasse en un granulat (12) de type « pellet », un four à pyrolyse (200) pour transformer le granulat en un granulat de biochar (23), positionné en aval de la station de transformation, et un conditionneur (400) positionné en aval du four à pyrolyse pour le conditionnement du granulat de biochar, l'installation comportant en outre des premiers moyens de transfert (21,21R) d'une énergie générée par le four à pyrolyse vers la station de transformation. Un procédé de production de biochar associé est également décrit.

## Description

### DOMAINE TECHNIQUE DE L'INVENTION

L'invention concerne, d'une part, un procédé de production de biochar ou assimilé sous la forme de granulat à partir d'une biomasse, et d'autre part, une installation de production associée.

### ETAT DE LA TECHNIQUE ANTERIEURE

Par définition, le biochar est un amendement du sol issu de la pyrolyse d'une biomasse. Le biochar est utilisé en agriculture pour augmenter la productivité des sols. En effet, le biochar agit pour réhumifier lesdits sols, améliorer la rétention d'eau et stimuler le système immunitaire des plantes cultivées sur lesdits sols. De plus, le biochar trouve un très grand intérêt dans la lutte contre le réchauffement climatique : lorsqu'il est produit à partir d'une biomasse renouvelable, le biochar permet de compenser les émissions de gaz à effet de serre en stockant dans les sols, sous sa forme élémentaire stable, le carbone issu du CO2 de l'atmosphère. Il agit comme un puits de carbone.

Toutefois, il est possible d'utiliser le biochar dans d'autres applications autre que l'agriculture. C'est pour cela que dans la suite du texte, à des fins de simplification, nous désignerons par le terme « biochar » seul le biochar en lui-même tel que communément défini ainsi que les assimilés obtenus de la manière à destination d'autres industries ou applications que celle de l'agriculture.

Actuellement, des procédés et des installations associées de production de biochar ou assimilés existent et ont pour principe de transformer un granulat issu d'une biomasse renouvelable. Le granulat est communément de type « pellet » (terme anglo-saxon désignant un granulé de bois sous la forme d'un bâtonnet cylindrique de combustible végétal compacté). Par exemple, le document WO2013/036694 décrit de tels procédé et installation associée. Ce dernier décrit une production de biochar à partir d'une biomasse renouvelable utilisant la torréfaction et la pyrolyse. Il décrit une étape préalable de transformation de la biomasse renouvelable en un granulat que peuvent traiter ensuite un torréfacteur et un four à pyrolyse pour l'obtention d'un biochar, entre autres. Cette transformation consiste en un broyage et un séchage de la biomasse.

Toutefois, de tels procédé et installation associée présentent une grande consommation énergétique du fait que la transformation de la biomasse renouvelable en granulat assimilable par le four à pyrolyse est énergivore. De ce fait, le fonctionnement des procédés et installations associées actuels n'est pas optimisé car il nécessite un apport énergétique externe à l'installation qui n'est plus compatible, aujourd'hui avec la problématique de réchauffement climatique.

### EXPOSE DE L'INVENTION

Un but de l'invention est de fournir un procédé de production de biochar ou assimilé à partir d'une biomasse minimisant au maximum les apports énergétiques externes.

A cette fin, il est prévu, selon l'invention, un procédé de production de biochar ou assimilés à partir d'une biomasse, le procédé comportant des étapes de :
a) transformation de la biomasse en granulat de type « pellet » ; puis
b) pyrolyse du granulat ainsi obtenu pour obtenir un granulat de biochar,
le procédé comportant en outre une première étape de transfert d'une énergie générée lors de l'étape de pyrolyse pour alimenter énergiquement tout ou partie de l'étape de transformation.

Ainsi, le fait de prévoir un transfert d'énergie issue de la pyrolyse pour assurer tout ou partie la transformation aval de la biomasse en granulat permet de réduire grandement les apports énergétiques externes.

Avantageusement, mais facultativement, le procédé selon l'invention présente au moins l'une des caractéristiques techniques suivantes :
- le procédé comprend une étape c) de refroidissement du granulat de biochar issu de l'étape b) de pyrolyse ;
- le procédé comporte en outre une deuxième étape de transfert d'une énergie générée lors de l'étape de refroidissement pour alimenter énergiquement tout ou partie de l'étape de transformation ; et,
- le procédé comporte une étape de génération d'une énergie électrique à partir d'une partie résiduelle de l'énergie générée lors de l'étape b) et/ou lors de l'étape c).

D'autre part, il est aussi prévu, selon l'invention, une installation de production de biochar ou assimilés à partir d'une biomasse, l'installation comportant une station de transformation de la biomasse en un granulat de type « pellet », un four à pyrolyse pour transformer le granulat en un granulat de biochar, positionné en aval de la station de transformation, et un conditionneur positionné en aval du four à pyrolyse pour le conditionnement du granulat de biochar, l'installation comportant en outre des premiers moyens de transfert d'une énergie générée par le four à pyrolyse vers la station de transformation.

Avantageusement, mais facultativement, l'installation selon l'invention présente au moins l'une des caractéristiques techniques suivantes :
- l'installation comprend un refroidisseur intercalé entre le four à pyrolyse et le conditionneur pour refroidir le granulat de biochar en sortie de four à pyrolyse avant d'être introduit dans le conditionneur ;
- l'installation comporte en outre des deuxièmes moyens de transfert d'une énergie générée par le refroidisseur vers la station de transformation ;
- les premiers et/ou deuxièmes moyens de transfert comportent une circulation d'un fluide caloporteur ;
- la station de transformation comporte au moins un broyeur et un séchoir situé en aval du broyeur, une sortie du séchoir étant connectée à une entrée du four à pyrolyse ;
- la station de transformation comprend en outre un écorceur positionné en amont des broyeur et séchoir ;
- le conditionneur comporte un dépoussiéreur pour dépoussiérer le granulat de biochar ;
- le conditionneur comporte des moyens de tamisage et de séparation du granulat de biochar en différente granulométrie ;
- le conditionneur comporte un broyeur secondaire en amont des moyens de tamisage et de séparation ;
- l'installation comprend des moyens de génération d'une énergie électrique à partir d'une partie de l'énergie générée par le four à pyrolyse et/ou le refroidisseur de sorte à alimenter tout ou partie des équipements électriques de l'installation ; et,
- l'installation est agencée de sorte à mettre en oeuvre le procédé de production précédent présentant au moins l'une des caractéristiques techniques précitées qui lui sont associés.

### BREVE DESCRIPTION DES FIGURES

D'autres caractéristiques et avantages de l'invention ressortiront à la lecture de la description qui suit d'un mode de réalisation de l'invention. Aux dessins annexés :
- la figure 1 est un schéma d'un premier mode de réalisation d'une installation selon l'invention associée à un procédé de production de biochar selon l'invention ;
- la figure 2 est un schéma d'un mode de réalisation d'une station de transformation de l'installation de la figure 1 ;
- la figure 3 est un schéma d'un mode de réalisation d'un conditionneur de l'installation de la figure 1 ;
- la figure 4 est une vue tridimensionnelle d'un four à pyrolyse de l'installation de la figure 1 ; et,
- La figure 5 est un schéma d'un deuxième mode de réalisation d'une installation selon l'invention associée à un procédé de production de biochar selon l'invention.

Pour plus de clarté, les éléments identiques ou similaires sont repérés par des signes de référence identiques sur l'ensemble des figures.

### DESCRIPTION DETAILLEE D'UN MODE DE REALISATION

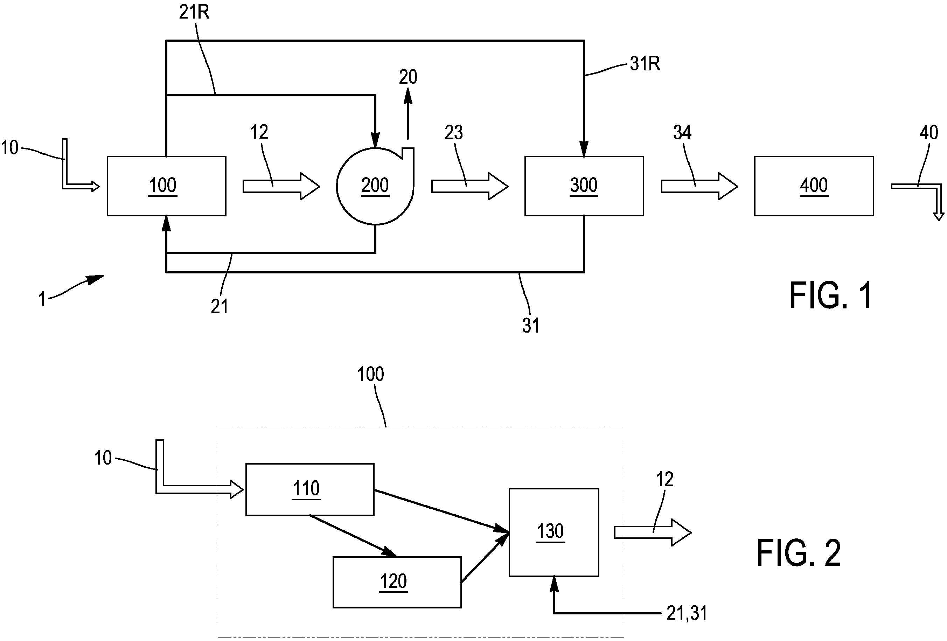

En référence à la figure 1, nous allons décrire un premier mode de réalisation d'une installation de production de biochar 1 selon l'invention. L'installation de production de biochar 1 selon l'invention est associée à un procédé de production de biochar selon l'invention qui sera décrit par la suite.

L'installation de production de biochar 1 selon l'invention est destinée à traiter une biomasse 10, de préférence renouvelable, composée de manière connue en soit de divers débris végétaux, en particulier des débris végétaux issus de la sylviculture pouvant aller jusqu'à des billes ou des grumes de bois. Pour cela, l'installation de production de biochar 1 selon l'invention comporte, en premier lieu, une station de transformation 100 qui reçoit la biomasse 10 brute en entrée pour la transformer en un granulat de type « pellet » 12 en sortie. Ensuite, l'installation de production de biochar 1 selon l'invention comporte des moyens de pyrolyse, ici sous la forme d'un four à pyrolyse 200, au sein desquels le granulat de type « pellet » 12 est introduit puis transformé en un granulat de biochar 23, aussi appelé « bouchon ». Le four à pyrolyse 200, en plus de produire le granulat de biochar 23, émet de la vapeur d'eau 20. En sortie des moyens de pyrolyse, l'installation de production de biochar 1 selon l'invention comprend des moyens de traitement et de conditionnement 300,400 du granulat de biochar 23 en divers conditionnements 40.

D'autre part, l'installation de production de biochar 1 selon l'invention comprend des premiers moyens de transfert 21,21R d'une énergie générée par le four à pyrolyse 200 vers la station de transformation 100 de sorte à l'alimenter en tout ou partie pour en assurer un fonctionnement. La présence de tels premiers moyens de transfert 21,21R permet de réduire considérablement l'apport externe en énergie permettant le fonctionnement de ladite station de transformation 100. Les premiers moyens de transfert 21,21R comprennent un circuit fermé dans lequel circule un fluide caloporteur, comme de l'eau.

Concernant maintenant les moyens de traitement et de conditionnement 300,400 du granulat de biochar 23, ces derniers comprennent un refroidisseur 300 qui reçoit en entrée le granulat de biochar 23 sorti du four à pyrolyse 200. Le rôle du refroidisseur est de faire baisser la température du granulat de biochar 23 pour un post traitement de conditionnement. En sortie du refroidisseur 300, l'installation de production de biochar 1 selon l'invention transporte un granulat de biochar refroidi 34 vers l'entrée d'un conditionneur 400 des moyens de traitement et de conditionnement 300,400.

De manière similaire, de sorte à utiliser une énergie générée par le refroidisseur 300 lors d'un fonctionnement, l'installation de production de biochar 1 selon l'invention comporte des deuxièmes moyens de transfert 31,31R de cette énergie générée par le refroidisseur 300 vers la station de transformation 100 de sorte à l'alimenter en tout ou partie pour en assurer un fonctionnement. La présence de tels deuxièmes moyens de transfert 31,31R, en addition aux premiers moyens de transfert 21,21R précédemment décrits, permet de réduire encore plus l'apport externe en énergie permettant le fonctionnement de ladite station de transformation 100. Comme pour les premiers moyens de transfert 21,21R, les deuxièmes moyens de transfert 31,31R comprennent un circuit fermé dans lequel circule un fluide caloporteur, comme de l'eau.

**Les** premiers 21,21R et deuxièmes 31,31R moyens de transfert qui viennent d'être décrits fonctionnent ici en parallèle. En variante de réalisation, ces premiers 21,21R et deuxièmes 31,31R moyens de transfert sont montés en série. Le fluide caloporteur froid entre et traverse d'abord le refroidisseur 300, puis le four à pyrolyse 200 : une sortie de fluide caloporteur du refroidisseur 300 est connectée fluidiquement à une entrée de fluide caloporteur du four à pyrolyse.

En référence maintenant à la figure 2, nous allons décrire un peu plus en détail la station de transformation 100 de l'installation de production de biochar 1 selon l'invention. La station de transformation 100 comporte un broyeur 120 qui va permettre de réduire en un granulat non sec la biomasse 10 entrante dans la station de transformation 100. Puis la station de transformation 100 comprend un séchoir 130 permettant d'assécher le granulat non sec sorti du broyeur 120 afin d'obtenir le granulat de type « pellet » 12 présentant une hygrométrie optimale pour le fonctionnement du four à pyrolyse 200. La biomasse 10 pouvant être très variée dans sa composition, la station de transformation 100 comporte un écorceur 110 en amont des broyeur 120 et séchoir 130. Cet écorceur 110 permet de détacher l'écorce des grumes ou des billes de bois formant la biomasse 10, lorsque cette dernière est directement issue de la sylviculture par exemple. Cette écorce peut être directement envoyée au séchoir 130 car elle se présente sous forme d'un granulat non sec compatible dans ces dimensions pour la suite du procédé de production de biochar selon l'invention mise en œuvre par l'installation de production de biochar 1 selon l'invention.

L'énergie transférée par les premiers 21,21R et deuxièmes 31,31R moyens de transfert est essentiellement utilisée pour assécher le granulat non sec au sein du séchoir 130, du fait que c'est une énergie calorifique.

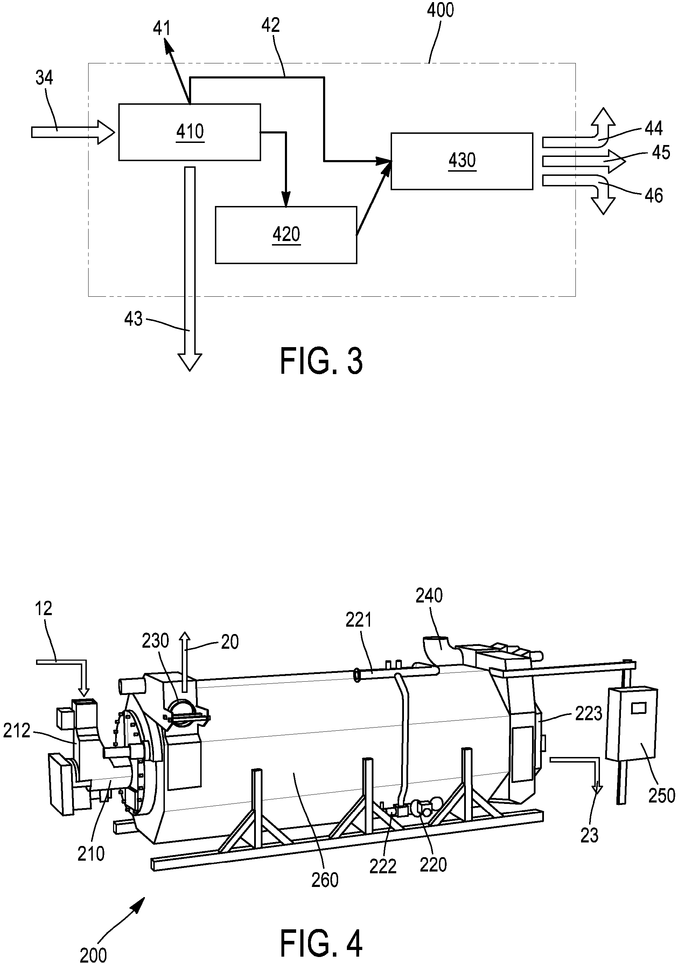

En référence maintenant à la figure 3, nous allons décrire le conditionneur 400 de l'installation de production de biochar 1 selon l'invention. Le conditionneur 400 reçoit en entrée, ici, le granulat de biochar refroidi 34 issu du refroidisseur 300. Le rôle du conditionneur 400 est de mettre dans des conditionnements variés 40 le granulat de biochar précédemment obtenu. Les conditionnements 40 sont de type containers ou encore « big bag » de volumes variés. Dans une première réalisation, le conditionneur 400 comporte un dépoussiéreur 410 du granulat de biochar refroidi 34 : cela permet d'enlever les poussières 41,42 du bouchon formant ledit granulat de biochar refroidi 34. Le bouchon forme alors un premier conditionnement 43 des conditionnements variés 40. Les poussières 41,42 sont récupérées pour être ensuite valorisées par ailleurs.

Dans une deuxième réalisation, le conditionneur 400 comporte des moyens de tamisage et de séparation 430 du granulat de biochar issus du dépoussiéreur 410 en différentes granulométries formant alors divers conditionnements 44,45,46,etc... des conditionnements variés 40. Une partie 42 des poussières 41,42 formée des plus grosses particules peuvent être introduites dans lesdits moyens de tamisage et de séparation 430 pour une meilleure valorisation. Afin d'avoir une meilleure homogénéité dans une répartition des granulométries précédemment évoquées, le conditionneur 400 comporte un broyeur secondaire 420 en amont des moyens de tamisage et de séparation 430. Le broyeur 420 reçoit tout ou partie du bouchon sortant du dépoussiéreur 410.

En référence maintenant à la figure 4, nous allons décrire brièvement un exemple de four à pyrolyse 200 aménagé dans l'installation de production de biochar 1 selon l'invention. Le four à pyrolyse 200 ici illustré est connu en soi. Il comporte une cuve 260 à pyrolyse qui est thermorégulée en ce qu'elle comporte une enveloppe externe de circulation d'un fluide caloporteur présentant une sortie de fluide 221 ainsi qu'une entrée de fluide 222. La sortie de fluide 221 est, dans l'installation de production de biochar 1 selon l'invention, fluidiquement connectée à une partie aller 21 des premiers moyens de transfert 21,21R, alors que l'entrée de fluide 222 est fluidiquement connectée à une partie retour 21R des premiers moyens de transfert 21,21R. Au niveau de l'entrée de fluide 222, le four à pyrolyse comporte des moyens formant pompe 220 d'entrainement du fluide caloporteur au sein de l'enveloppe externe de la cuve à pyrolyse 260.

Le four à pyrolyse 200 comporte une vanne d'entrée 212 du granulat de type « pellet » issu de la station de transformation 100. Cette vanne 212, ici motorisée alimente une vis sans fin 210, elle aussi motorisée, qui s'étend longitudinalement au sein de la cuve à pyrolyse 260. Cette vis sans fin 210 fait cheminer à vitesse constante et prédéterminée le granulat de type « pellet » 12 au sein de la cuve à pyrolyse 260 afin de pyrolyser ledit granulat de type « pellet » 12 en un granulat de biochar 23. Le granulat de biochar 23 est récupéré au niveau d'une sortie 223 de la cuve à pyrolyse 260. La sortie 223 est alimentée à l'aide d'une deuxième vis sans fin (non visible) s'étendant dans un fond de la cuve à pyrolyse 260 sur lequel tombe le granulat de biochar 23 de la vis sans fin 210.

De plus, le four à pyrolyse 200 comporte une cheminée d'évacuation 230 dans une partie supérieure de la cuve à pyrolyse 260 de la vapeur d'eau 20 issue d'une transformation d'un syngas, ou gaz de synthèse, issue de la pyrolyse. Cette transformation s'effectue dans une chambre de combustion située en partie supérieure de la cuve à pyrolyse 260. Des moyens d'admission d'air 240 sont aussi prévus pour l'alimentation en oxygène de la transformation du syngas.

En dernier, le four à pyrolyse 200 comporte une unité de contrôle et de pilotage 250.

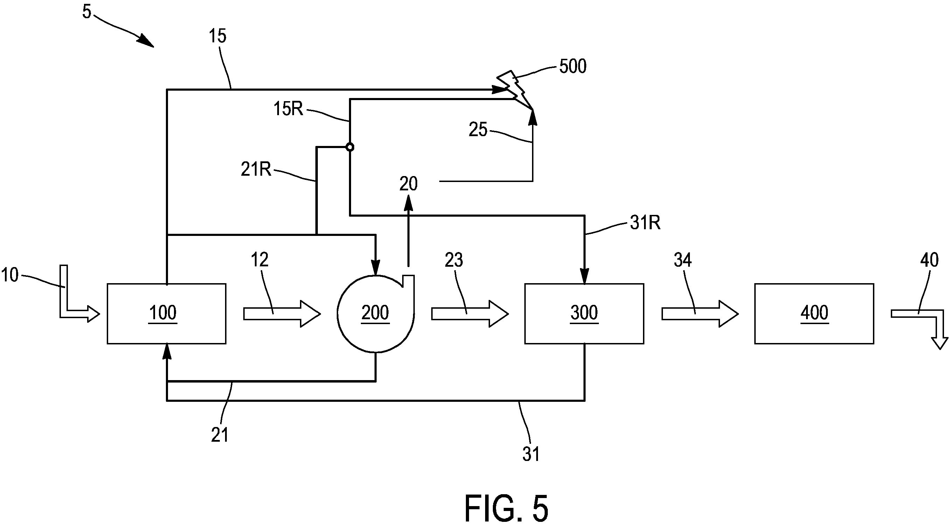

Nous allons maintenant décrire un deuxième mode de réalisation d'une installation de production de biochar 5 selon l'invention illustrée à la figure 5. L'installation de production de biochar 5 selon l'invention de ce deuxième mode de réalisation se différencie de l'installation de production de biochar 1 selon l'invention du premier mode de réalisation en ce qu'elle comporte des moyens de génération d'une énergie électrique 500 qui va permettre d'alimenter tout ou partie des équipements électriques de l'installation de production de biochar 5 selon l'invention : par exemple, différents moteurs d'entrainement de convoyeur de granulat de type « pellet » 12, de biochar 23, de biochar refroidi 34, des moteurs et unité de contrôle et de pilotage 250 du four à pyrolyse 200, etc... Pour cela, des troisièmes moyens de transfert 15,15R sont prévus au sein des premiers 21,21R et deuxièmes 31,31R moyens de transfert pour acheminer une énergie résiduelle en sortie de la station de transformation 100 vers les moyens de génération d'une énergie électrique 500. D'autre part, des moyens d'acheminement 25 sont prévus pour acheminer la vapeur d'eau 20, qui est à haute température, depuis le four à pyrolyse 200 vers les moyens de génération d'une énergie électrique 500. Les moyens de génération d'une énergie électrique sont connus en eux-mêmes et ne seront pas décrits plus avant.

L'installation de production de biochar 1,5 selon l'invention qui vient d'être décrite est associée à et permet de mettre en œuvre un procédé de production de biochar selon l'invention qui va être brièvement décrit ci-après.

Le procédé de production de biochar selon l'invention comporte une première étape a) de transformation de la biomasse 10 en granulat de type « pellet » 12. Cette étape s'effectue au sein de la station de transformation 100 de l'installation de production de biochar 1,5 selon l'invention.

Puis, le procédé de production de biochar selon l'invention comprend une étape b) de pyrolyse du granulat de type « pellet » 12 ainsi obtenu pour produire un granulat de biochar 23. Cette étape se déroule au sein d'un four à pyrolyse 200 de l'installation de production de biochar 1,5 selon l'invention.

En parallèle à ces deux étapes a) et b), le procédé de production de biochar selon l'invention comporte une première étape de transfert d'une énergie générée lors de l'étape b) de pyrolyse pour alimenter énergiquement tout ou partie de l'étape a) de transformation. Cette première étape de transfert est réalisée à l'aide des premiers moyens de transfert 21,21R de l'installation de production de biochar 1,5 selon l'invention.

D'autre part, le procédé de production de biochar selon l'invention comprend une étape c) additionnelle de refroidissement du granulat de biochar 23 issu de l'étape b) de pyrolyse de sorte à obtenir un granulat de biochar refroidi 34. Cette étape se déroule au sein d'un refroidisseur 300 de l'installation de production de biochar 1,5 selon l'invention.

En parallèle à cette étape c) additionnelle; le procédé de production de biochar selon l'invention comporte une deuxième étape de transfert d'une énergie générée lors de l'étape c) de refroidissement pour alimenter énergiquement tout ou partie de l'étape a) de transformation. Cette deuxième étape de transfert est réalisée à l'aide des deuxièmes moyens de transfert 31,31R de l'installation de production de biochar 1,5 selon l'invention.

En variante de réalisation, le procédé de production de biochar selon l'invention comporte une étape de génération d'une énergie électrique à partir d'une partie de l'énergie générée lors de l'étape b) et/ou lors de l'étape c). Cette étape s'effectue en parallèle des étapes a) à c). Elle est réalisée à l'aide des moyens de génération d'une énergie électrique 500 de l'installation de production de biochar 5 selon l'invention. La partie de l'énergie générée lors de l'étape b) et/ou lors de l'étape c) est transportée par, d'une part, les troisièmes moyens de transferts 15,15R insérés en aval de la station de transformation 100 au sein des premiers 21,21R et deuxièmes 31,31R moyens de transfert, et, d'autre part, par les moyens d'acheminement 25 de la vapeur d'eau 20, qui est à haute température, depuis le four à pyrolyse 200 vers les moyens de génération d'une énergie électrique 500.

Un tel procédé de production de biochar selon l'invention et une telle installation de production de biochar 1,5 selon l'invention associée permet de réduire de manière très importante les apports énergétiques externes à l'installation. En conséquence, cela permet d'optimiser le bilan global énergétique et carbone d'une production de biochar ou assimilés qui est déjà en lui-même un excellent puits à carbone.

Bien entendu, il est possible d'apporter à l'invention de nombreuses modifications sans pour autant sortir du cadre de celle-ci.

## Revendications

1. Procédé de production de biochar ou assimilés à partir d'une biomasse (10), le procédé comportant des étapes de :
a) transformation de la biomasse (10) en granulat (12) de type « pellet » ; puis
b) pyrolyse du granulat (12) ainsi obtenu pour obtenir un granulat de biochar (23),
**caractérisé en ce que** le procédé comporte en outre une première étape de transfert d'une énergie générée lors de l'étape de pyrolyse pour alimenter énergiquement tout ou partie de l'étape de transformation.

2. Procédé selon la revendication 1, **caractérisé en ce que** le procédé comprend une étape c) de refroidissement du granulat de biochar (23) issu de l'étape b) de pyrolyse.

3. Procédé selon la revendication 2, **caractérisé en ce que** le procédé comporte en outre une deuxième étape de transfert d'une énergie générée lors de l'étape de refroidissement pour alimenter énergiquement tout ou partie de l'étape de transformation.

4. Procédé selon l'une des revendications 1 à 3, **caractérisé en ce que** le procédé comporte une étape de génération d'une énergie électrique à partir d'une partie résiduelle de l'énergie générée lors de l'étape b) et/ou lors de l'étape c).

5. Installation de production de biochar (1;5) ou assimilés à partir d'une biomasse (10), l'installation comportant une station de transformation (100) de la biomasse en un granulat (12) de type « pellet », un four à pyrolyse (200) pour transformer le granulat en un granulat de biochar (23), positionné en aval de la station de transformation, et un conditionneur (400) positionné en aval du four à pyrolyse pour le conditionnement du granulat de biochar, **caractérisée en ce que** l'installation comporte en outre des premiers moyens de transfert (21,21R) d'une énergie générée par le four à pyrolyse vers la station de transformation.

6. Installation selon la revendication 5, **caractérisée en ce qu'**elle comprend un refroidisseur (300) intercalé entre le four à pyrolyse et le conditionneur pour refroidir le granulat de biochar en sortie de four à pyrolyse avant d'être introduit dans le conditionneur.

7. Installation selon la revendication 6, **caractérisée en ce qu'**elle comporte en outre des deuxièmes moyens de transfert (31,31R) d'une énergie générée par le refroidisseur vers la station de transformation.

8. Installation selon l'une des revendications 5 à 7, **caractérisée en ce que** les premiers et/ou deuxièmes moyens de transfert comportent une circulation d'un fluide caloporteur.

9. Installation selon l'une des revendications 5 à 8, **caractérisée en ce que** la station de transformation comporte au moins un broyeur (120) et un séchoir (130) situé en aval du broyeur, une sortie du séchoir étant connectée à une entrée du four à pyrolyse.

10. Installation selon la revendication 9, **caractérisée en ce que** la station de transformation comprend en outre un écorceur (110) positionné en amont des broyeur et séchoir.

11. Installation selon l'une des revendication 5 à 10, **caractérisée en ce que** le conditionneur (400) comporte un dépoussiéreur (410) pour dépoussiérer le granulat de biochar.

12. Installation selon l'une des revendications 5 à 11, **caractérisée en ce que** le conditionneur comporte des moyens de tamisage et de séparation (430) du granulat de biochar en différentes granulométries.

13. Installation selon la revendication 12, **caractérisée en ce que** le conditionneur comporte un broyeur secondaire (420) en amont des moyens de tamisage et de séparation.

14. Installation selon l'une des revendications 5 à 13, **caractérisée en ce qu'**elle comprend des moyens de génération d'une énergie électrique (500) à partir d'une partie de l'énergie générée par le four à pyrolyse et/ou le refroidisseur de sorte à alimenter tout ou partie des équipements électriques de l'installation.

15. Installation selon l'une des revendications 5 à 14, **caractérisée en ce qu'**elle est agencée de sorte à mettre en œuvre le procédé selon les revendications 1 à 4.
